# EUROPEAN PATENT SPECIFICATION

(11) **EP 1 387 154 B1**
(45) Date of publication and mention of the grant of the patent: **13.10.2004**
(21) Application number: 02425496.3
(22) Date of filing: 31.07.2002
(51) Int. Cl.: G01J 3/14, G01J 3/02

(54) **Broadband spectrometer with objective comprising an aspheric corrector mirror and a dispersing element traversed twice by the input beam**
Breitband-Spektrometer mit einem einen asphärischen Korrekturspiegel aufweisenden Objektiv und einem zweifach vom Einfallsstrahl durchquerten Dispersionselement
Spectromètre à large bande avec un objectif comprenant un miroir de correction asphérique et un élément dispersif traversé deux foix du faisceau incident

(43) Date of publication of application: 04.02.2004
(73) Proprietor: Galileo Avionica S.p.A., 50013 Campi Bisenzio (Firenze) (IT)
(72) Inventor: Romoli, Andrea, 50132 Firenze (IT); Taccola, Matteo, 50055 Lastra a Signa, Firenze (IT); Calamai, Luciano, 50013 Campi Bisenzio, Firenze (IT)
(74) Representative: Mannucci, Gianfranco, Dott.-Ing.

(56) References cited:
- EP-A- 0 656 531
- EP-A- 1 178 293
- WO-A-91/05360
- US-A- 4 497 540
- US-A- 4 984 888

## Description

### Technical field

The present invention regards a spectrometer and in particular but not exclusively an imaging spectrometer.

### State of the art

A spectrometer is an optical system, which conjugates an object in a superimposition of chromatic images on an image plane in which a detector is situated.

The images at each wavelength are translated in one direction, known as the spectral direction, by a quantity which depends on the wavelength and in accordance with a law of chromatic dispersion.

The object in the spectrometer is often an image coming from another optical system.

The object observed by the spectrometer is generally delimited by a rectangular field diaphragm, known as a slit.

The spatial direction and the spectral direction are defined by referring to the sides of the slit or of its images. The spatial direction is generally that of the longer side of the slit rectangle and the spectral direction is the shorter one.

The image in all types of spectrometer is formed by a superimposition of chromatically dispersed chromatic images of the slit, that is, images translated in the spectral direction by a quantity which depends on the wavelength of the radiation.

The spectrometer class includes generic spectrometers and imaging spectrometers.

There is a substantial difference between a generic spectrometer (non-imaging) and an imaging spectrometer:

A non-imaging spectrometer chromatically resolves radiation coming from an extended object (normally delimited by a rectangular field diaphragm known as a slit) and gives a measurement of the intensity of each chromatic component present in the object. This measurement is integrated in the spatial direction. This means that the detector situated on the focal plane of the spectrometer has no ability to distinguish between different points of the object (slit) in the spatial direction. In other words, if an electro-optical detector is used, it is generally a linear array.

Conversely, in an imaging spectrometer the detector is able to distinguish in the spatial direction too. In the case of electro-optical sensors, these will be rectangular matrices of detectors.

Correspondingly, the quality of the chromatic images of the slit must be such as to make it possible to resolve details of the object in the spatial direction.

In substance, the class of generic non-imaging spectrometers is a sub-class of imaging spectrometers. This invention can be applied both to imaging spectrometers and to non-imaging spectrometers.

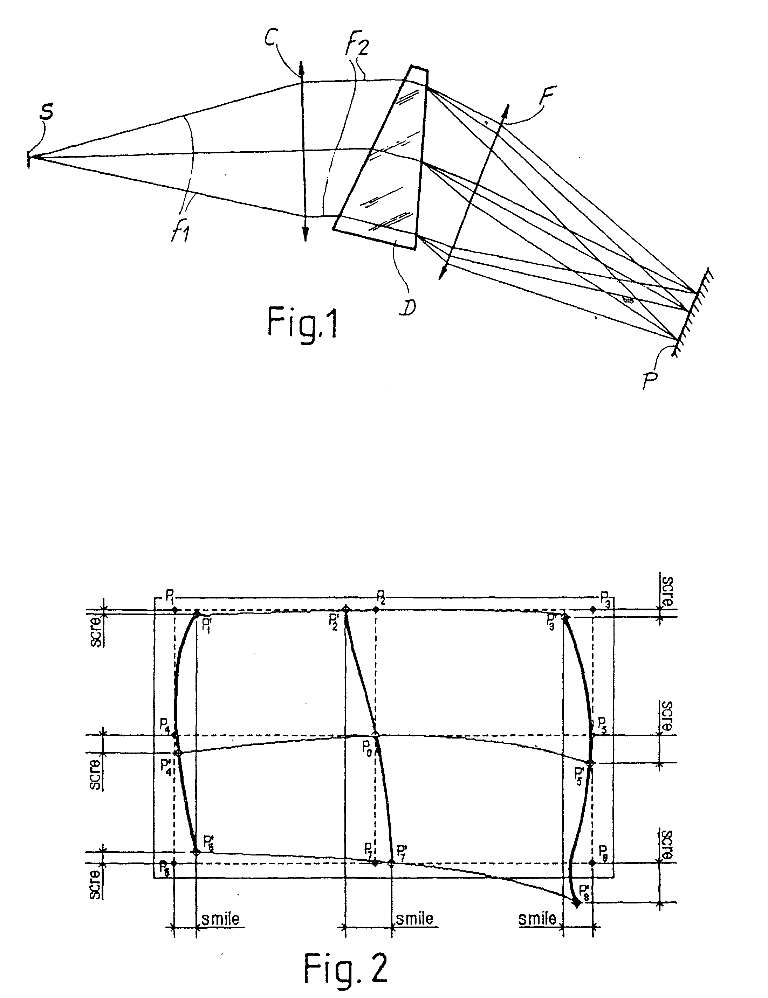

Fig. 1 provides a generic representation of a spectrometer in what is know as the Gaertner configuration. The spectrometer is composed of three essential parts: a collimator C, a chromatically dispersing system or disperser D and a focusing objective F. There is a slit S at the focal point of the collimator C, which extends longitudinally at right angles to the plane of the figure.

An appropriate optical focusing system, not shown, and extraneous to the spectrometer as such, forms the image of the object to analyze in the slit S (a telescope is used in the case of a distant object, while an optical conveying system (relay), such as a microscope lens, for example, is used for close objects).

The collimator C projects the image of the slit S to infinity, transforming the diverging beam f1 of rays coming from any point in the slit into a beam f2 of rays parallel to each other. The inclination of this beam varies with the object point from which it comes in the direction normal to the drawing.

The rays collimated in this way pass through the dispersing system D and are deviated, with different angles depending on the wavelength. Finally, the focusing objective F focuses the rays which have the same direction at the same image point. Therefore, images of the slit with different "colors" form on the focal plane P and their position varies in the direction orthogonal to the length of the slit.

The Gaertner configuration makes it possible to make spectrometers in which the focal lengths of the collimator C and of the focusing objective F are not necessarily the same. It is therefore possible to obtain enlargements other than 1 x.

An example of a spectrometer of this type is described in EP-A-0316802. A further example of a spectrometer with a particular system of aspheric correction is described in EP-A-1178293.

The disperser generically indicated by D in Fig. 1 can be made up of one or more components, in the form of prisms (refractive disperser), diffraction gratings (diffractive disperser) or mixed (prisms and gratings, known as "grisms").

A generally undesirable phenomenon known as slit image curvature, or "slit curvature" or "smile" may appear when using refractive or prismatic dispersers in an imaging spectrometer, or diffraction gratings realized on curved surfaces. This phenomenon is illustrated in Fig. 2 which shows some ideal image points from P0 to P8, marked by a black dot, and which are found on the perimeter of a rectangular grid, with a height in what is called the spatial direction (vertical in Fig. 2) equal to the length of the slit and a length (in the horizontal direction) corresponding to the extension in the chromatic dispersion direction of the dispersed chromatic band. These points correspond to:
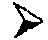 In the center of the slit:
   P4 at one end of the dispersed chromatic band,
   P5 at the other end of the band,
   P0 at the center of the chromatic band,
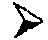 At the top end of the slit:
   P1 at one end of the dispersed chromatic band,
   P2 at the center of the chromatic band,
   P3 at the other end of the band,
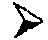 At the bottom end of the slit:
   P6 at one end of the dispersed chromatic band,
   P7 at the center of the chromatic band,
   P8 at the other end of the band.

The "true" images of the slit for three different colors are drawn in thick lines. The points from P'1 to P'8 represent the real images, affected by the spectrometer distortions, of the corresponding points from P1 to P8.

The slit image curvature or smile is the horizontal distance (i.e. along the spectral direction) of the real image points from the corresponding ideal image points. The smile is a function of the height h of the point considered on the slit and of the wavelength λ. In prism spectrometers the smile depends on the wedge angle of the dispersing prisms. The smaller the wedge angles, the smaller the smile introduced. To reduce the smile while retaining the same dispersion it is necessary to increase the number of prisms while reducing the dispersing power.

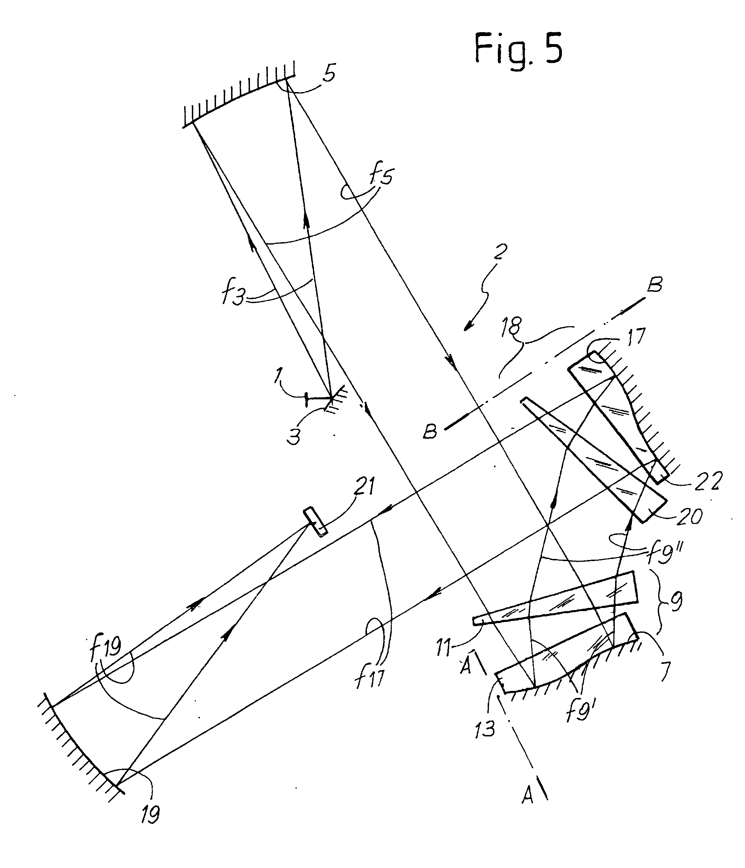

As well as this error, what is known as the spatial coregistration error may occur in these apparatuses. The spatial coregistration error is the distance of a "real" image point from its ideal counterpart, measured in the spatial direction rather than the spectral one. In Fig. 5, this is indicated as SCRE. This type of error derives from a chromatic variation of the enlargement on the basis of the field of view.

As well as the smile and spatial coregistration errors indicated above, it is also necessary when making a spectrometer to take account of the axial and extra-axial geometrical and chromatic aberrations, including the field curvature, which occurs when instead of lying on a plane the image lies on a curved surface (a spherical cap in an initial approximation). As in an imaging spectrometer the sensitive elements of the detector generally lie on a plane, this aberration is highly undesirable and must be contained within the optical system's depth of focus or of field, which depends linearly on the wavelength and in quadratic terms on the relative aperture or f-number. The variation of the size of the image of a point, due to field curvature, depends in quadratic terms on the distance from the center, that is, on the height of the field of view.

On the other hand, even more important is the correction of the aberrations and, in particular, of the field curvature for systems with small f-numbers (the relative aperture or f-number is given by the relationship A = focal length/usable diameter), i.e. those which are more open. Being able to work with low f-numbers is an important feature for a high-performance imaging spectrometer. Greater extension of the field of view is another very important feature for an imaging spectrometer.

The correction of the field curvature, along with that of the other aberrations, makes it possible to obtain better resolution of the optical system and therefore to use detectors with smaller pixels. This leads to systems with shorter focal lengths and more compact dimensions as a consequence. Of course, the smaller the pixel with the same resolution and radiometric efficiency, the greater the opening of the spectrometer must be, with a smaller f-number as a consequence.

US-A-4,497,540 discloses a spectrometer including an inlet slit, downstream of which the beam is collimated, dispersed in a prism disperser and afterwards focussed on a detector. An aspheric mirror is combined to the prism disperser. In a further embodiment disclosed in US-A-4,497,540, the collimated beam is split into two separate beams by means of a beam splitter, such that the infrared radiation is separated from the remaining radiation and two separate beams are generated. Separate and independent prism dispersers and aspheric mirrors are arranged along the two separate paths followed by said two beams into which the main beam is split by the beam splitter. The dispersed beams are focussed on two separate detectors.

### Objects and brief description of the invention

The object of this invention is to provide a spectrometer which makes it possible to reduce the errors indicated above and reduce or eliminate chromatic aberration. Another purpose of this invention is to provide a particularly compact spectrometer.

These and other objects and advantages, which will be clear to those skilled in the art on reading the text which follows, are obtained in substance with a spectrometer according to claim 1.

Characteristically, according to the invention the collimator comprises a converging spherical mirror, the focuser comprises a converging spherical mirror and the first aspheric corrector element comprises a first aspheric mirror, that is, a reflecting Schmidt plate for eliminating the spherical and axial aberrations. Furthermore, the disperser, which works in transparency, that is through which the input beam of electromagnetic radiations passes, is arranged in said path in such a way that it is traversed by the beam at least twice. Excellent optical qualities in terms of bandwidth and reduction or elimination of the geometrical aberrations are obtained with a configuration of this type, as will be discussed in greater detail below. Furthermore, the arrangement of the disperser which permits double passage makes it possible to reduce the number of disperser elements with the same dispersion. This results in a reduction of the number of the device's components and therefore greater compactness. The construction of the disperser elements is easier as dispersing prisms with lower angles can be used with the same dispersion obtained as with traditional systems in which the dispersing prism is traversed by the beam once only.

In practice, the arrangement can be such that the beam passes through the disperser a first time upstream from the aspheric mirror and once downstream from the aspheric mirror.

The aspheric mirror can be part of the collimator or can be part of the focuser. According to the invention, also a second aspheric corrector element is envisaged. This can be composed of a dioptric Schmidt plate, that is, one working in transmission, with the beam to correct passing through the plate itself, rather than being reflected by it. Nevertheless, to obtain qualitatively superior results, according to a further improvement of this invention the second aspheric corrector element is also a reflecting element, that is, an aspheric mirror. This makes it possible to prevent the introduction of a non-eliminable chromatic aberration into the dioptric Schmidt plates which are working in transmission.

Furthermore, according to the invention two dispersers are also provided. Each of these can be traversed twice by the beam of luminous radiation, advantageously before and after the beam has intercepted the respective aspheric corrector element. The possibility of also using further dispersers which would be traversed by the beam once only is not ruled out. Another possibility is that in the presence of two aspheric corrector elements, the dispersers associated with them may be arranged in such a way that one is traversed once only and the other traversed twice by the beam of luminous radiation.

According to an advantageous embodiment of the invention, the first and/or second aspheric corrector element is made in the form of a reflecting surface on one face of the respective disperser. This makes it possible to obtain further advantages described below with reference to a specific example of implementation.

The disperser or each disperser can be composed of a single prism or of two or more prisms. These can be coupled to each other; that is, have one face in common. Vice versa, the two or more prisms which constitute the disperser or each disperser can be arranged in succession along the optical path without having any faces in common.

To eliminate the field curvature too without being constrained to a particular choice of focal lengths and to a particular orientation of the optics making up the system, according to a particularly advantageous embodiment the use is envisaged of a diverging spherical mirror (preferably associated with the collimator) which eliminates the field and slit curvature. Preferably such a mirror is arranged directly downstream from the inlet slit, between it and the converging mirror of the collimator.

In practice, the structure of the collimator, comprising the aspheric corrector element and the converging spherical mirror, is an off-axis Schmidt objective structure (in the case in which a diverging mirror is used for correcting the field curvature) or an off-axis Schmidt-Cassegrain objective, that is, one on which the optical axis does not coincide with the geometrical axis.

In an improved embodiment of this invention, the spectrometer may present a division of the beam in two or more spectral channels. In particular, it is possible to envisage a beam divider along the first optical path, downstream from which the first optical path extends to reach the first detector, to form a first spectral channel. Again downstream from the beam divider, a second optical path develops, constituting the second spectral channel, along which at least one second detector is arranged. It must be understood that by using several dichroic mirrors or beam dividers it is possible in the same way to obtain even more than two spectral channels and therefore more than two optical paths terminating in respective detectors.

Subdivision of the optical path into two (or more) separate spectral channels can be carried out at various points in the first optical path, so that the various optical paths will have a greater or smaller number of components in common. The choice of one or the other of the various possible combinations depends, for example, on requirements with regard to cost, space, dimensions and reciprocal compatibility between the spectral bands which have to be treated by the spectrometer. For example, it is possible to envisage the spectrometer including a beam divider along the first optical path, downstream from which the first optical path extends and a second optical path develops, at least one second detector being arranged along said second optical path. Alternatively, it is possible to envisage the beam divider being arranged downstream from said first focuser. Or the beam divider can be arranged downstream from the first disperser and upstream from the first focuser, while the second optical path comprises a second focuser and a second detector. The first and second optical path can each comprise a respective further disperser downstream from the beam divider.

In a different possible configuration, the beam divider is arranged upstream from the first disperser, and the second optical path comprises a second disperser, a second focuser with a respective spherical mirror, and said second detector. The second optical path can comprise a further aspheric corrector element, which can be an aspheric mirror, arranged between the beam divider and the spherical mirror of the second focuser. The spherical mirror of said second focuser and said further aspheric corrector element can in turn form an off-axis Schmidt objective.

Further advantageous characteristics and forms of embodiment of this invention are indicated in the attached subordinate claims.

### Brief description of the drawings

The invention will be better understood by following the description and associated drawing which shows practical non-limitative forms of embodiment of the invention. More in particular:
Fig. 1 shows a diagram in principle of a spectrometer with the Gaertner configuration, described above;
Fig. 2 is a schematic representation of the phenomenon of slit curvature and the spatial coregistration error;
Figs. 3 to 9 show various possible configurations of a spectrometer according to the invention;
Fig.10 shows an embodiment not falling within the scope of the claims; and
Fig.11 shows a further embodiment of the invention.

### Detailed description of preferred forms of embodiment of the invention

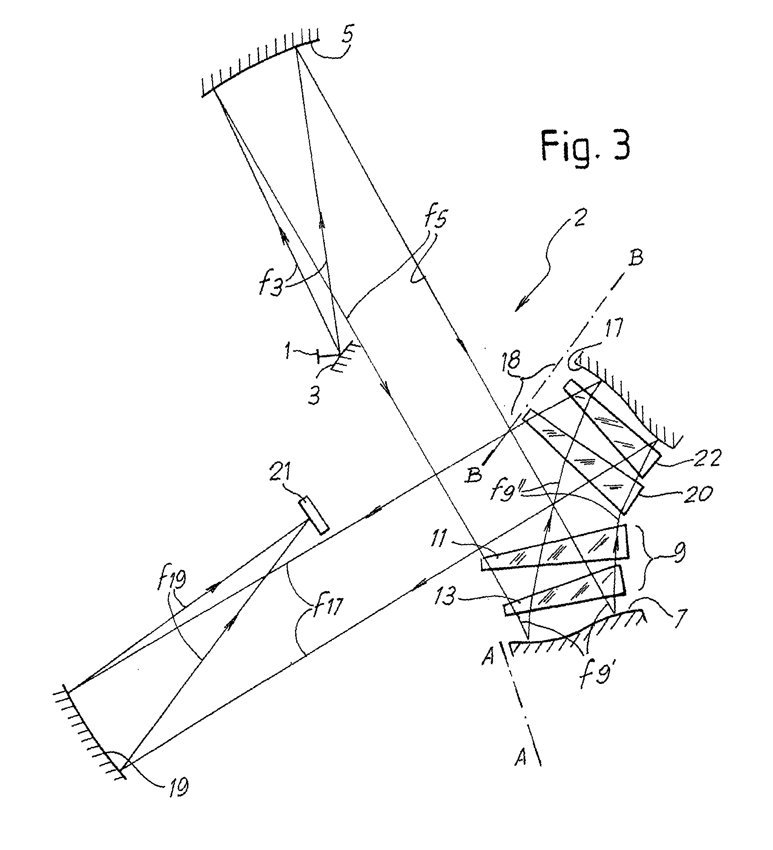

Fig. 3 shows a first possible form of embodiment of the spectrometer according to this invention, generically indicated as 2. Following the optical path of the incoming beams, the spectrometer presents an inlet slit 1, which extends orthogonally to the plane of the figure. The beams coming from inlet optics, which do not form part of the spectrometer and are not represented, penetrate through this slit. The characteristics of these optics vary on the basis of the specific application the spectrometer is to be used for. The input beam passing through the slit 1 encounters a first diverging spherical mirror 3 which acts to correct the field curvature and slit curvature (smile). The beam reflected by the mirror 3, indicated by F3, then encounters a converging spherical mirror 5 which constitutes the mirror of a Schmidt objective forming the collimator of the spectrometer. The collimated beam F5 reflected by the spherical mirror 5 then encounters an aspheric corrector mirror 7 for the correction of the axial and extra-axial spherical aberration.

The system constituted by the diverging spherical mirror 3, by the converging spherical mirror 5 and by the aspheric corrector mirror 7, which overall form the collimator of the spectrometer 2, constitutes what is known as a Schmidt-Cassegrain objective with specular corrector. The optical axis of this system is the A-A axis. It is therefore an off-axis objective.

Before reaching the aspheric corrector mirror 7, the collimated beam F5 passes the first time through a dispersing system, or disperser, generically indicated as 9 and comprising, in this example of embodiment, a pair of prisms, 11 and 13, between which an aperture diaphragm (not shown) can be arranged. The disperser 9 is arranged between the collimator mirror 5 and the aspheric corrector mirror 7. Each of the two prisms, 11, 13, can be composed of two optic wedges in materials which need not be identical. However, these characteristics are not binding for the purposes of this invention. It is possible to make a broadband spectrometer using a greater number of prisms or a single prism. The dispersed beam F9' leaving the disperser 9 encounters the aspheric corrector mirror 7 and, reflected and geometrically corrected by this mirror, once again passes through the disperser 9. The latter is therefore traversed twice by the beam of electromagnetic radiations: once before and once after the correction made by the aspheric corrector mirror 7.

The beam F9" leaving the disperser after the second passage through it then enters the focuser which comprises an aspheric corrector mirror 17 which reflects the beam F17 toward a converging spherical mirror 19, from which the focused beam F19 reaches a detector 21. The aspheric corrector mirror 17 and the converging spherical mirror 19 constitute a Schmidt objective, in which the corrector mirror 17 corrects the geometrical aberrations with the exception of the field curvature. The latter is appropriately corrected directly by the inlet diverging spherical mirror 3, the negative power of which is selected in such a way as to eliminate the field curvature of the two objectives (collimator and focuser). The optical axis of the focusing objective is indicated by B-B. In this case too, therefore, the optical system is an off-axis one.

Before encountering the aspheric corrector mirror 17, the beam F9" emerging from the first disperser 9 passes a first time through a second disperser 18 comprising, like the disperser 9, two prisms 20, 22. This disperser is traversed once again by the beam after it has been reflected by the aspheric corrector mirror 17. Therefore, even the second disperser 18, which is associated with the focuser of the spectrometer, is traversed twice by the beam. The beam of electromagnetic radiations therefore undergoes eight dispersions overall, passing through four prisms twice.

In this example of embodiment, and in others which will be described below, the axes of the various beams lie on one and the same plane, but this is not indispensable. Indeed, starting from the configuration in Fig. 3, it is possible to obtain infinite variants of the arrangement of the components of the system simply by inserting flat bending mirrors at any desired angle between the spherical mirror 5 and the disperser 9, wherever the beam F17 does not interfere with the other beams, and/or between the spherical mirror 19 and the disperser group 18, wherever the beam F5 does not interfere with other beams. In this way, the collimator and/or focuser can be outside the plane of the figure. It is also possible to bend the beams where they interfere, bending the beams F3 and F5 simultaneously with a single flat mirror and/or bending beams F17 and F19 in the same way. In principle it is possible to insert a flat double-face mirror at the point where beams F5 and F17 cross, in such a way as to exchange the positions of the collimator and focuser.

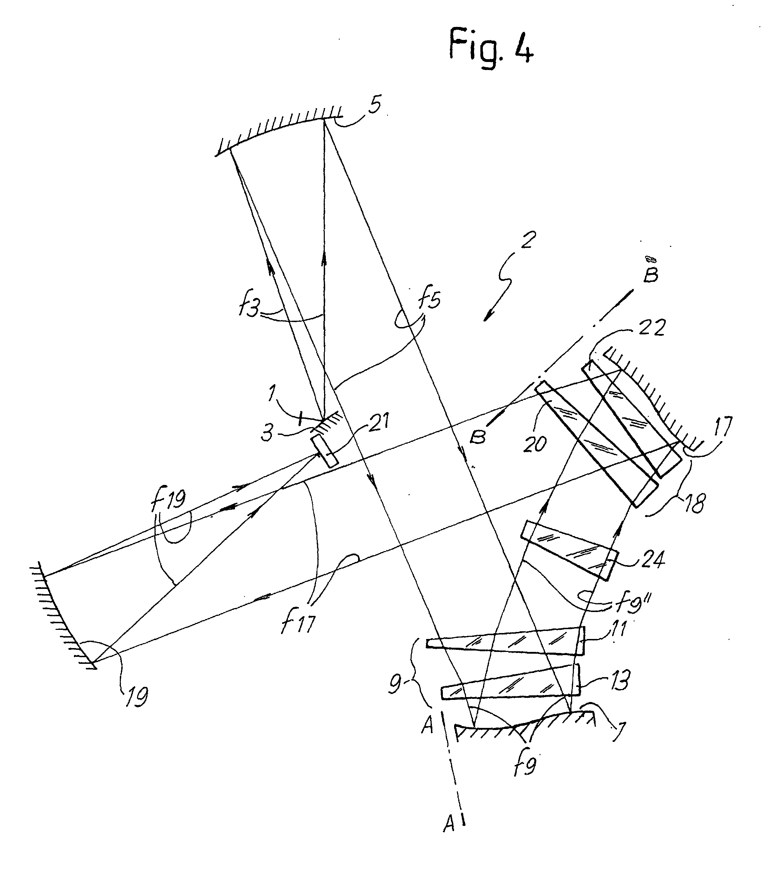

Fig. 4 shows a different configuration of the spectrometer according to the invention. Identical numbers indicate parts which are identical to or correspond to those in Fig. 3. The difference compared with the configuration in Fig. 3 is in the presence of a further disperser consisting of a prism 24, arranged between the dispersers 9 and 18, which is traversed once only by the beam F9" emerging from the disperser 9.

Fig. 5 shows a further variant of embodiment of the spectrometer in Fig. 3. Identical numbers again indicate parts which are identical to or correspond to those in Fig. 3. In this case, the two aspheric corrector mirrors 7, 17 are formed directly on the rear surfaces of the prisms 13 and 22 of the dispersers 9 and 18 respectively, instead of as elements which are physically separate from the prisms. The remaining components of the system remain substantially unchanged. From an optical point of view, the substantial advantage of this form of embodiment consists of the fact that four passages through the prisms are eliminated, with lower loss and greater efficiency as a result. From a mechanical point of view, this configuration achieves the further advantage that it reduces the number of components in the device.

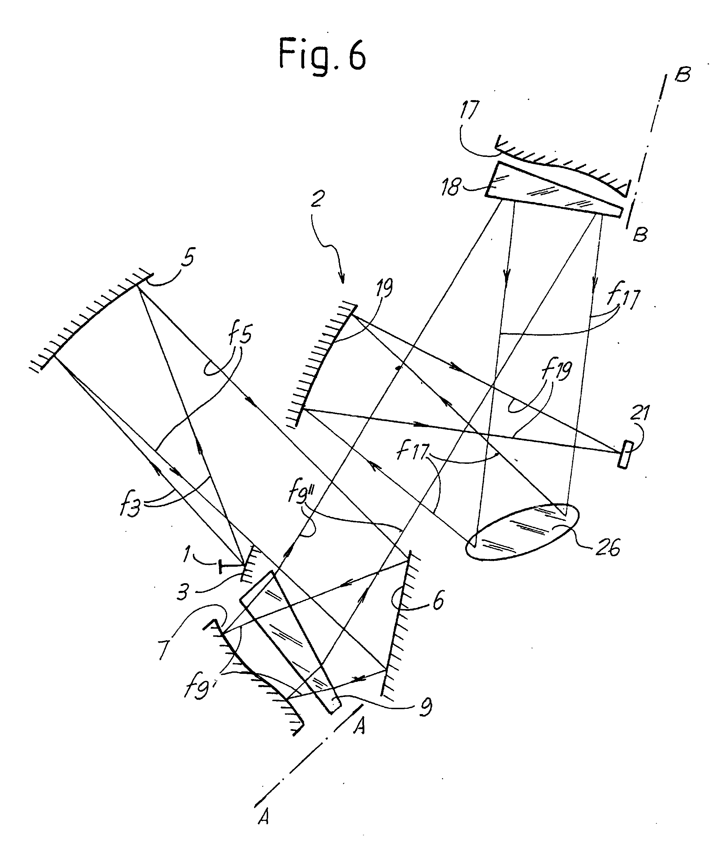

Fig. 6 shows a further form of embodiment of the spectrometer. Identical numbers indicate parts which are identical to or correspond to those in previous examples of embodiment. The beam enters the spectrometer through a slit 1 and encounters a diverging spherical mirror 3 for the correction of the field curvature and slit curvature. The beam F3 reflected by the mirror 3 encounters a converging spherical collimator mirror 5 from which a collimated beam F5 emerges. The latter encounters a flat mirror 6 which bends the beam F5 toward a first disperser 9, consisting of a single prism in this example of embodiment. The beam F9' emerging from the prism of the disperser 9 encounters the aspheric corrector mirror 7 and, reflected by it, passes through the same prism 9 a second time.

The beam F9" emerging from the prism of the disperser 9 after the second passage encounters a second disperser 18, composed of a single prism in this case too, and is reflected by a second aspheric corrector mirror 17. The latter reflects the corrected beam once again toward the disperser 18 which, in this case too, is then traversed twice by the beam, before and after the geometrical correction made by the aspheric corrector mirror 17. The beam F17 reflected by the aspheric corrector mirror 17 and emerging from the disperser 18 is reflected by a flat mirror 26 which, in the example shown, is inclined with respect to the plane of the figure, so that the beam reflected by it emerges from the plane itself. This three-dimensional effect is not visible in the drawing as Fig. 6 is a plan representation. However, it should be realized that the beam reflected by the flat mirror 26 encounters a converging spherical focuser mirror 19 which is located on a different plane with respect to the remaining optical components described so far.

The focused beam F19 emerges from the converging mirror 19 of the focuser and encounters the detector 21. In the case in which the flat mirror 26 is not orthogonal to the plane of the figure, the spherical mirror 19 and the detector 21 will be inclined with respect to this plane.

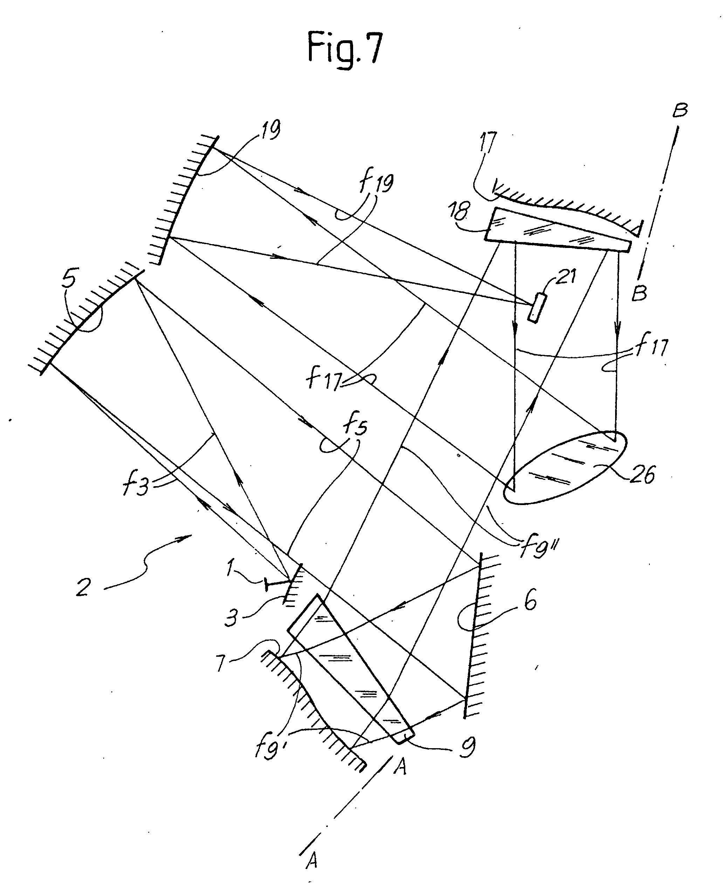

A configuration similar to the one in Fig. 6 is shown in Fig. 7, where identical numbers indicate parts which are identical to or correspond to those in Fig. 6. Said configuration however is necessarily bent out of the plane of the figure to prevent interference of the beam F9" with detector 21.

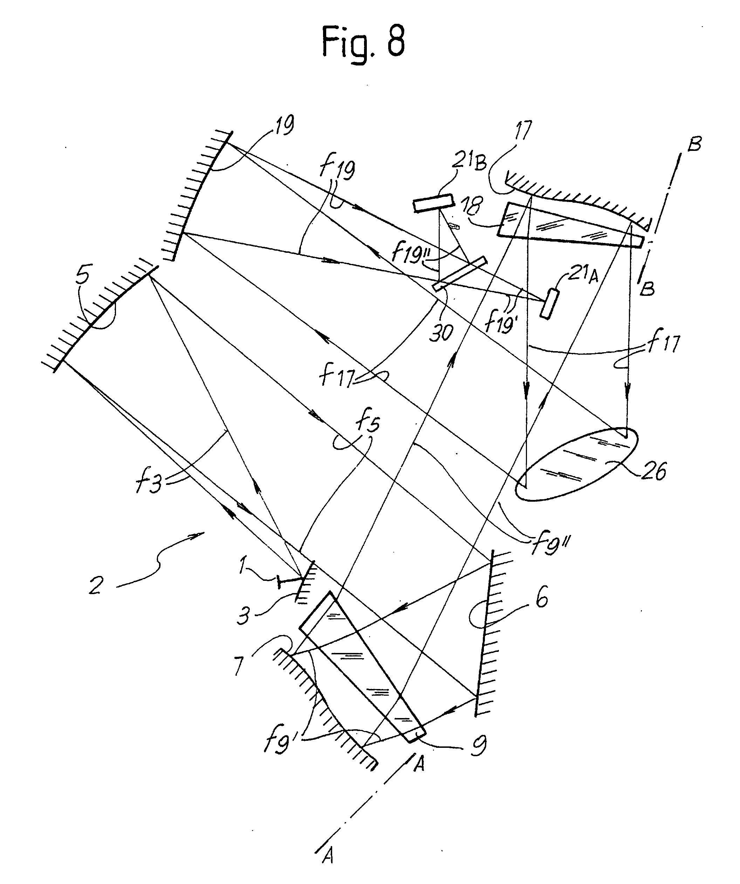

Fig. 8 shows a form of embodiment similar to that in Fig. 7, but modified by the provision of a double path and a double detector. Identical numbers again indicate parts which are identical to or correspond to those in the example of embodiment in Figs. 6 and 7. In this example, the beam F19 emerging focused by the converging spherical mirror 19 of the focuser encounters a dichroic mirror 30 or other beam divider element along its path. One part F19' of the beam F19 passes through the element 30 and reaches the detector 21A, while another fraction F19" of the beam F19 is deviated by the element 30 and reaches a second detector 21B along a second path. The two beams F19' and F19" correspond to two distinct spectral bands. Their separation can make it possible to use particular detectors for the two bands.

A similar arrangement can be made by using an entirely reflecting mirror instead of the dichroic mirror 30. In this case, the beam F19 will be integrally reflected toward the detector 21B, and the detector 21A will be omitted.

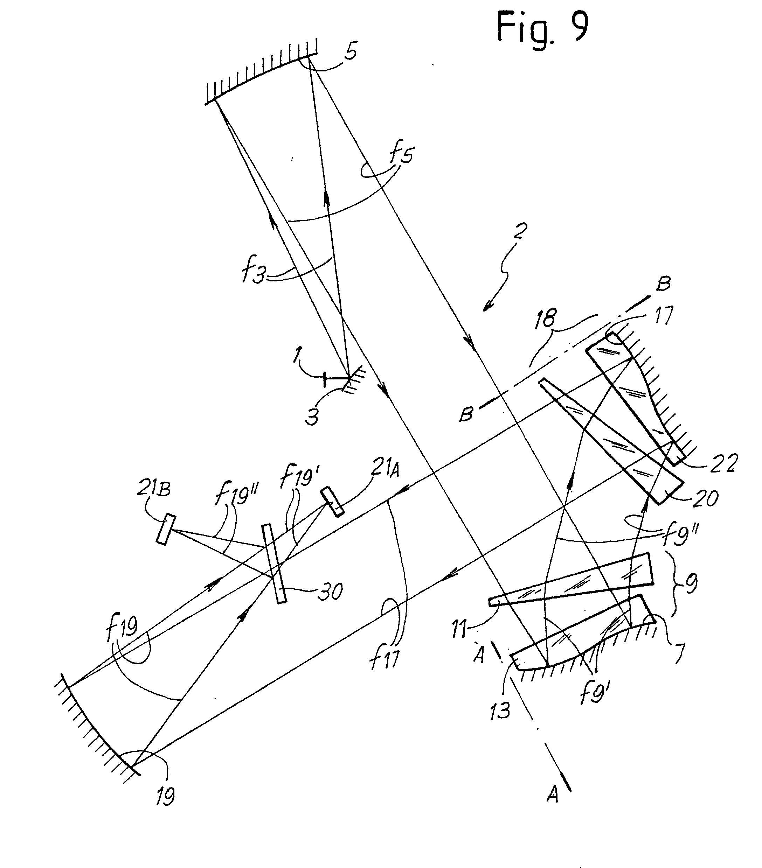

Fig. 9 shows a variant of realization of the configuration in Fig. 5. Identical numbers indicate identical or corresponding parts. Compared with the example in Fig. 5, a dichroic mirror 30 or other beam divider element is envisaged in Fig. 9 and subdivides the beam F19 in two parts F19' and F19" sent to a first detector 21A and to a second detector 21B.

The division of the beam along two (or more) detection paths can also be made in a different point in the main path. In this case, there will be a greater number of optical components and they will have to be duplicated to be arranged in both paths.

Particularly important is the possibility of inserting one or more dichroic separators in the sections in practically parallel rays between the disperser prisms and the spherical mirrors of the collimation and/or focusing objectives. The insertion of dichroic separators in parallel rays eliminates the need to use aspheric surfaces to correct the aberrations introduced into converging rays by an inclined plate.

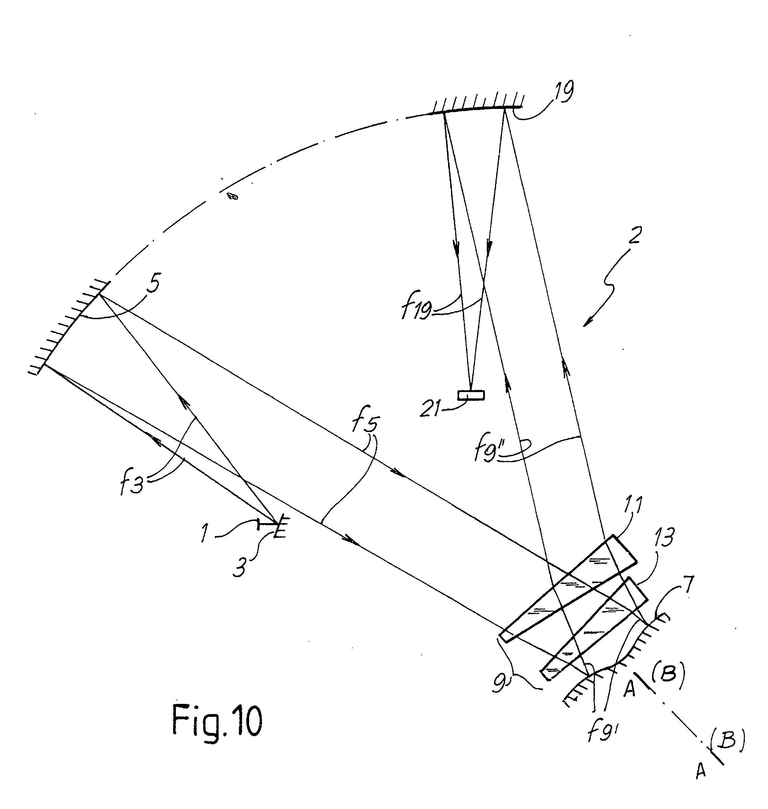

In the previous examples of embodiment a description was made of a spectrometer with two aspheric corrector mirrors 7 and 17, and two dispersers, 9 and 18. This is not the only possible configuration of the spectrometer. For example, Fig. 10 shows a form of embodiment which uses one aspheric corrector mirror only. In this case, the beam of electromagnetic radiation enters the device through a slit still indicated as 1 and is reflected by a spherical convex mirror 3 for the correction of the slit curvature. The slit F3 emerging from the mirror 3 is reflected by a first converging spherical collimator mirror 5. The collimated beam F5 reaches a disperser 9 composed of two prisms 11, 13. After passing through the two prisms 11, 13 of the disperser 9, the beam indicated by F9' encounters an aspheric corrector mirror 7 and is reflected by it. The geometrically corrected beam reflected by the aspheric mirror 7 once again passes through the prisms 11 and 13, to undergo dispersion again.

The beam F9" emerging from the disperser 9 after the second passage directly reaches a converging spherical focusing mirror 19 which focuses the beam F19 onto the detector 21.

After fixing the angular position of the focusing objective with respect to the main beam coming out of the disperser 9, in all the configurations described above the field curvature and the slit curvature or smile can be corrected simultaneously using a single diverging spherical mirror 3 appropriately inclined with respect to the plane containing the inlet slit 1.

Furthermore, considering that the systems constituting the focuser objective and the collimator have the same aberrations, these can be annulled by appropriately choosing the configuration of the prisms, the focal length of the objectives and the angular position of the focusing objective. In this case, if there are no constraints of a geometrical or other nature which advise against or impede the choice of this particular arrangement, compensation of the field curvature and of the slit curvature can be obtained even without the diverging spherical mirror 3.

It is possible to make configurations in which the spectrometer works with an enlargement greater than one, by diversifying the focal lengths of the collimator and focuser. In this case, no particular stratagems need be followed and the same observations made above apply. In this case too it is possible to correct both the field curvature and the smile with a single diverging spherical mirror 3 located close to the inlet slit 1.

The forms of embodiment described use only reflecting elements for the correction of the geometrical aberrations. In particular, aspheric mirrors 7 and 17 are used in both the collimator and focuser for correcting the axial and extra-axial spherical aberration. The use of these components makes it possible to prevent the introduction of chromatic aberrations and to obtain a device which is particularly advantageous in terms of resistance to radiation and extension of the chromatic band.

Nevertheless, while partly doing without this double advantage, it is possible to make spectrometers in which one of the aspheric specular correctors is replaced by a dioptric Schmidt plate, i.e. in transmission.

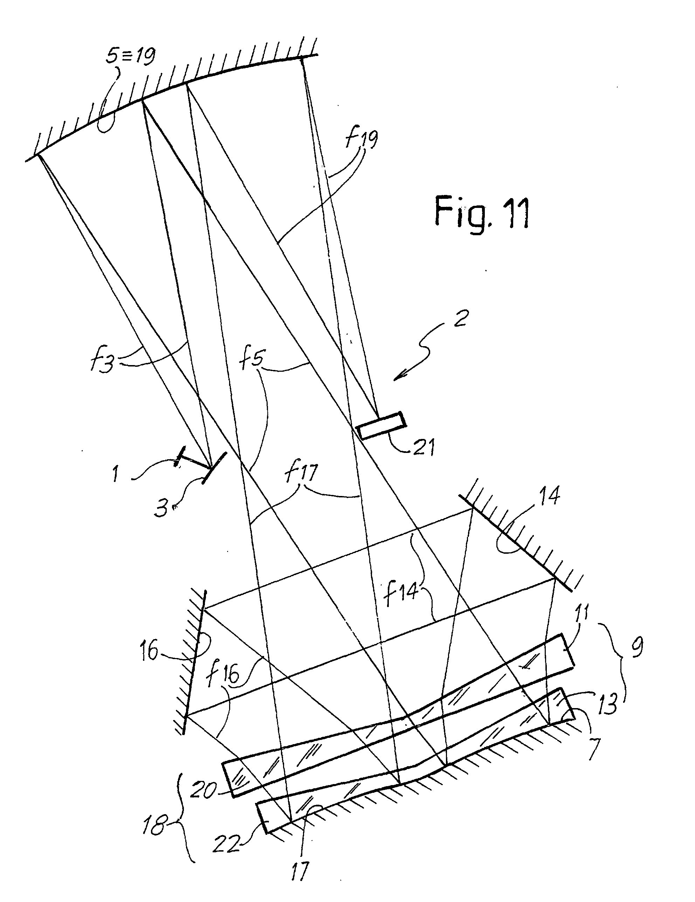

Fig. 11 shows another possible arrangement, similar to that in Fig. 10. Identical numbers indicate parts which are identical to or correspond to those in Fig. 10. The inlet slit is indicated by 1, and 3 is the diverging spherical mirror for correcting the field curvature and slit curvature. 5 indicates the converging spherical mirror of the collimator objective which receives the beam F3 reflected by the diverging mirror 3 and reflects it in F5. The beam F5 reflected by the mirror 5 passes a first time through a first disperser 9 formed by two prisms 11, 13, and reaches a reflecting Schmidt plate, i.e. an aspheric corrector mirror 7, realized as a reflecting surface of the prism 13. The beam corrected and reflected by the Schmidt plate or aspheric corrector mirror passes a second time through the disperser 9 formed by the prisms 11, 13 and reaches (beam F9") a first flat mirror 14. The beam F14 reflected by the first flat bending mirror 14 encounters a second flat bending mirror 16 which deviates the beam (beam F16) toward a second disperser 18 composed of two prisms 20, 22 made (in the example illustrated) in one piece with the corresponding prisms 11, 13 of the disperser 9. On the rear face of the prism 22 is formed a second aspheric corrector mirror, that is, a second reflecting Schmidt plate, indicated by 17, which (in this example) is realized as a single reflecting plate with plate 7.

The beam F17 corrected and reflected by the aspheric corrector mirror 17 passes through the disperser 18 a second time and reaches a converging spherical mirror 19 forming part of the focuser objective. In the example illustrated, the converging spherical mirror 19 and the converging spherical mirror 5 of the collimator are formed by different parts of the same concave spherical mirror. The beam F19 is sent, focused, from the focuser mirror 19 to the detector 21.

In the example in Fig. 11, the two prisms 13 and 22 are made in a single piece and, as a consequence, the two aspheric corrector mirrors 7, 17 are made as a single plate. More easily, in a variant of embodiment, these prisms will be made as two distinct parts and the aspheric corrector mirror will be made on a separate support from said prisms, possibly in a single piece or in two pieces (mirror 7 and mirror 17).

In the various configurations, A-A and B-B indicate the optical axes of the collimation and focusing systems.

It is understood that the drawing only shows possible forms of embodiment of the invention, the forms and arrangements of which can vary without, however, leaving the framework of the basis conception of the invention, defined in the attached claims.

## Claims

1. A spectrometer comprising at least a first optical path for a beam of electromagnetic radiation, along which the following are arranged: an inlet slit (1) for an input beam (f3); at least one collimator including a first converging spherical mirror (5) to collimate the input beam; a first disperser (9) for dispersing the beam collimated by said first collimator into its chromatic components, said first disperser being arranged in said path in such a way as to be traversed by the beam of electromagnetic radiation at least twice; a first aspheric corrector element combined to said first disperser (9) and including a first aspheric mirror (7); a second disperser (18) combined to a second aspheric corrector element (17); at least one first focuser including a second converging spherical mirror (19); and at least one first detector (21) which receives the dispersed and focused beam (f19) from said first focuser (19); wherein said first and second dispersers (9, 18) and said first and second aspheric corrector elements (7, 17) are arranged such that the collimated beam (f5) coming from said collimator (5) passes through both said first and second dispersers (9, 18) and is corrected by said first and second aspheric corrector elements (7, 17).

2. Spectrometer according to claim 1, wherein said second aspheric corrector element comprises a second aspheric mirror (17).

3. Spectrometer according to claim 1, **characterized in that** said first disperser (9) is a prism disperser.

4. Spectrometer according to claim 3, **characterized in that** said second disperser (18) is a prism disperser.

5. Spectrometer according to one or more of the previous claims, **characterized in that** the beam passes through the first disperser a first time upstream from said first aspheric mirror (7) and once downstream from said first aspheric mirror.

6. Spectrometer according to one or more of the previous claims, **characterized in that** said first aspheric mirror (7) is associated with said collimator (5).

7. Spectrometer according to claim 6, **characterized in that** said first disperser (9) is arranged along said path between said collimator (5) and said first aspheric mirror (7).

8. Spectrometer according to one or more of the previous claims, **characterized in that** said second disperser (18) is arranged in said path in such a way as to be traversed at least twice by the beam of electromagnetic radiation.

9. Spectrometer according to claims 2 and 8, **characterized in that** said second disperser (18) is arranged in such a way that the beam of electromagnetic radiation passes through the disperser a first time upstream from said second aspheric mirror (17) and once downstream from said second aspheric mirror.

10. Spectrometer according to claim 9, **characterized in that** said second disperser (18) is arranged along said path between the second aspheric corrector element (17) and said focuser (19).

11. Spectrometer according to one or more of the previous claims, **characterized in that** said converging spherical mirror (5) of the collimator and the first aspheric mirror (7) are part of an off-axis Schmidt or Schmidt-Cassegrain objective.

12. Spectrometer at least according to claim 2, **characterized in that** said converging spherical mirror (19) of the focuser and the second aspheric mirror (17) are part of an off-axis Schmidt or Schmidt-Cassegrain objective.

13. Spectrometer according to one or more of the previous claims, **characterized in that** said first aspheric mirror (7) is realized as a reflecting surface of said first disperser (9).

14. Spectrometer at least according to claim 2, **characterized in that** said second aspheric mirror (17) is realized as a reflecting surface of said second disperser (18).

15. Spectrometer according to one or more of the previous claims, **characterized in that** an optical element (3) is arranged along said first optical path for the correction of the field curvature and of the curvature of the slit image.

16. Spectrometer according to claim 15, **characterized in that** said optical element for the correction of the field curvature and of the curvature of the slit image comprises a diverging spherical mirror (3).

17. Spectrometer according to claim 15 or 16, **characterized in that** said optical element (3) for the correction of the field curvature and of the curvature of the slit image is arranged along said first optical path, between the inlet slit (1) and the converging spherical mirror (5) of said collimator.

18. Spectrometer according to one or more of the previous claims, **characterized in that** said collimator and said focuser have different focal lengths.

## Patentansprüche

1. Spektrometer mit wenigstens einem ersten Strahlengang für den Strahl einer elektromagnetischen Strahlung, entlang welchem angeordnet sind:
ein Eingangsspalt (1) für den Eingangsstrahl (f3); wenigstens ein Kollimator mit einem ersten, konvergierenden sphärischen Spiegel (5) zum Parallelrichten des Eingangsstrahls; ein erstes dispergierendes Element (9) zum Dispergieren des Strahls, welcher durch den ersten Kollimator parallel gerichtet ist, in dessen chromatische Komponenten, wobei das erste dispergierende Element in dem Strahlengang so angeordnet ist, daß es wenigstens zweimal von dem Strahl der elektromagnetischen Strahlung durchquert wird; ein erstes asphärisches Korrekturelement kombiniert mit dem ersten dispergierenden Element (9) und mit einem ersten asphärischen Spiegel (7); ein zweites dispergierendes Element (18) kombiniert mit einem zweiten asphärischen Korrekturelement (17); wenigstens ein erstes Fokussierelement mit einem zweiten konvergierenden sphärischen Spiegel (19); und wenigstens ein erster Detektor (21), der den dispergierten und fokussierten Strahl (f19) von dem ersten Fokussierelement (19) empfängt; wobei die ersten und zweiten dispergierenden Elemente (9, 18) und die ersten und zweiten asphärischen Korrekturelemente (7, 17) so angeordnet sind, dass der von Kollimator (5) kommende gebündelte Strahl (f5) sowohl durch das erste als auch zweite dispergierende Element (9, 18) hindurchgeht und durch die erste und zweiten asphärischen Korrekturelemente (7, 17) korrigiert wird.

2. Spektrometer nach Anspruch 1, wobei das zweite asphärische Korrekturelement einen zweiten asphärischen Spiegel (17) aufweist.

3. Spektrometer nach Anspruch 1, **dadurch gekennzeichnet, dass** das erste dispergierende Element (9) ein Dispersionsprisma ist.

4. Spektrometer nach Anspruch 3, **dadurch gekennzeichnet, dass** das zweite dispergierende Element (18) ein Dispersionsprisma ist.

5. Spektrometer nach einem oder mehreren der vorstehenden Ansprüche, **dadurch gekennzeichnet, dass** der Strahl ein erstes Mal stromaufwärts von dem ersten asphärischen Spiegel (7) und einmal stromabwärts von dem ersten asphärischen Spiegel durch das erste dispergierende Element durchgeht.

6. Spektrometer nach einem oder mehreren der vorstehenden Ansprüche, **dadurch gekennzeichnet, dass** der erste asphärische Spiegel (7) dem Kollimator (5) zugeordnet ist.

7. Spektrometer nach Anspruch 6, **dadurch gekennzeichnet, dass** das erste dispergierende Element (9) entlang des Strahlengangs zwischen dem Kollimator (5) und dem ersten asphärischen Spiegel (7) angeordnet ist.

8. Spektrometer nach einem oder mehreren der vorstehenden Ansprüche, **dadurch gekennzeichnet, dass** das zweite dispergierende Element (18) in dem Strahlengang so angeordnet ist, dass es von dem Strahl der elektromagnetischen Strahlung wenigstens zweimal durchschritten wird.

9. Spektrometer nach Anspruch 2 und 8, **dadurch gekennzeichnet, dass** das zweite dispergierende Element (18) so angeordnet ist, dass der Strahl der elektromagnetischen Strahlung ein erstes Mal stromaufwärts von dem zweiten asphärischen Spiegel (17) und einmal stromabwärts von dem zweiten asphärischen Spiegel durch das dispergierende Element hindurchgeht.

10. Spektrometer nach Anspruch 9, **dadurch gekennzeichnet, dass** das zweite dispergierende Element (18) in dem Strahlengang zwischen dem zweiten asphärischen Korrekturelement (17) und dem Fokussierelement (19) angeordnet ist.

11. Spektrometer nach einem oder mehreren der vorstehenden Ansprüche, **dadurch gekennzeichnet, dass** der konvergierende, sphärische Spiegel (5) des Kollimators und der erste asphärische Spiegel (7) Teil eines achsentfemten Schmidt- oder Schmidt-Cassegrain-Objektivs sind.

12. Spektrometer wenigstens nach Anspruch 2, **dadurch gekennzeichnet, dass** der konvergierende, sphärische Spiegel (19) des fokussierenden Elementes und der zweite asphärische Spiegel (17) Teil eines achsentfernten Schmidt- oder Schmidt-Cassegrain-Objektivs sind.

13. Spektrometer nach einem oder mehreren der vorstehenden Ansprüche, **dadurch gekennzeichnet, dass** der erste asphärische Spiegel (7) als eine reflektierende Oberfläche des ersten dispergierenden Elementes (9) realisiert ist.

14. Spektrometer wenigstens nach Anspruch 2, **dadurch gekennzeichnet, dass** der zweite asphärische Spiegel (17) als eine reflektierende Oberfläche des zweiten dispergierenden Elementes (18) realisiert ist.

15. Spektrometer nach einem oder mehreren der vorstehenden Ansprüche, **dadurch gekennzeichnet, dass** entlang dem ersten Strahlengang ein optisches Element (3) zur Korrektur der Feldkrümmung und der Krümmung des Spaltbildes angeordnet ist.

16. Spektrometer nach Anspruch 15, **dadurch gekennzeichnet, dass** das optische Element zur Korrektur der Feldkrümmung und der Krümmung des Spaltbildes einen divergierenden, sphärischen Spiegel (3) aufweist.

17. Spektrometer nach Anspruch 15 oder 16, **dadurch gekennzeichnet, dass** das. optische Element (3) zur Korrektur der Feldkrümmung und der Krümmung des Spaltbildes entlang dem ersten Strahlengang zwischen dem Eingangsspalt (1) und dem konvergierenden sphärischen Spiegel (5) des Kollimators angeordnet ist.

18. Spektrometer nach einem oder mehreren der vorstehenden Ansprüche, **dadurch gekennzeichnet, dass** der Kollimator und das fokussierende Element unterschiedliche Brennweiten haben.

## Revendications

1. Spectromètre comprenant au moins un premier trajet optique pour un faisceau de rayonnement électromagnétique, trajet le long duquel sont aménagés : une fente d'entrée (1) pour un faisceau d'entrée (f3); au moins un collimateur comprenant un premier miroir sphérique convergent (5) pour collimater le faisceau d'entrée; un premier disperseur (9) pour disperser le faisceau collimaté par ledit premier collimateur en ses composantes chromatiques, ledit premier disperseur étant aménagé dans ledit trajet de manière à être traversé par le faisceau de rayonnement électromagnétique au moins deux fois; un premier élément correcteur asphérique combiné audit premier disperseur (9) et comprenant un premier miroir asphérique (7); un second disperseur (18) combiné à un second élément correcteur asphérique (17); au moins un premier focalisateur comprenant un second miroir sphérique convergent (19); et au moins un premier détecteur (21) qui reçoit le faisceau dispersé et focalisé (f19) dudit premier focalisateur (19); dans lequel lesdits premier et second disperseurs (9, 18) et lesdits premier et second éléments correcteurs asphériques (7, 17) sont aménagés de sorte que le faisceau collimaté (f5) issu dudit collimateur (5) passe à travers à la fois lesdits premier et second disperseurs (9, 18) et soit corrigé par lesdits premier et second éléments correcteurs asphériques (7, 17).

2. Spectromètre selon la revendication 1, dans lequel ledit second élément correcteur asphérique comprend un second miroir asphérique (17).

3. Spectromètre selon la revendication 1, **caractérisé en ce que** ledit premier disperseur (9) est un disperseur à prismes.

4. Spectromètre selon la revendication 3, **caractérisé en ce que** ledit second disperseur (18) est un disperseur à prismes.

5. Spectromètre selon une ou plusieurs des revendications précédentes, **caractérisé en ce que** le faisceau passe à travers le premier disperseur une première fois en amont dudit premier miroir asphérique (7) et une fois en aval dudit premier miroir asphérique.

6. Spectromètre selon une ou plusieurs des revendications précédentes, **caractérisé en ce que** ledit premier miroir asphérique (7) est associé audit collimateur (5).

7. Spectromètre selon la revendication 6, **caractérisé en ce que** ledit premier disperseur (9) est aménagé le long dudit trajet entre ledit collimateur (5) et ledit premier miroir asphérique (7).

8. Spectromètre selon une ou plusieurs des revendications précédentes, **caractérisé en ce que** ledit second disperseur (18) est aménagé dans ledit trajet de manière à être traversé au moins deux fois par le faisceau de rayonnement électromagnétique.

9. Spectromètre selon les revendications 2 et 8, **caractérisé en ce que** ledit second disperseur (18) est aménagé de manière que le faisceau de rayonnement électromagnétique passe à travers le disperseur une première fois en amont dudit second miroir asphérique (17) et une fois en aval dudit second miroir asphérique.

10. Spectromètre selon la revendication 9, **caractérisé en ce que** ledit second disperseur (18) est aménagé le long dudit trajet entre le second élément correcteur asphérique (17) et ledit focalisateur (19).

11. Spectromètre selon une ou plusieurs des revendications précédentes, **caractérisé en ce que** ledit miroir sphérique convergent (5) du collimateur et le premier miroir asphérique (7) font partie d'un objectif de Schmidt ou de Schmidt-Cassegrain à axe décalé.

12. Spectromètre au moins selon la revendication 2, **caractérisé en ce que** ledit miroir sphérique convergent (19) du focalisateur et le second miroir asphérique (17) font partie d'un objectif de Schmidt ou de Schmidt-Cassegrain à axe décalé.

13. Spectromètre selon une ou plusieurs des revendications précédentes, **caractérisé en ce que** ledit premier miroir asphérique (7) se présente sous la forme d'une surface réfléchissante dudit premier disperseur (9).

14. Spectromètre au moins selon la revendication 2, **caractérisé en ce que** ledit second miroir asphérique (17) se présente sous la forme d'une surface réfléchissante dudit second disperseur (18).

15. Spectromètre selon une ou plusieurs des revendications précédentes, **caractérisé en ce qu'**un élément optique (3) est aménagé le long dudit premier trajet optique pour corriger la courbure du champ et la courbure de l'image de la fente.

16. Spectromètre selon la revendication 15, **caractérisé en ce que** ledit élément optique pour la correction de la courbure du champ et de la courbure de l'image de la fente comprend un miroir sphérique divergent (3).

17. Spectromètre selon la revendication 15 ou 16, **caractérisé en ce que** ledit élément optique (3) pour la correction de la courbure du champ et de la courbure de l'image de la fente est aménagé le long dudit premier trajet optique, entre la fente d'entrée (1) et le miroir sphérique convergent (5) dudit collimateur.

18. Spectromètre selon une ou plusieurs des revendications précédentes, **caractérisé en ce que** ledit collimateur et ledit focalisateur ont différentes distances focales.
